# EUROPEAN PATENT SPECIFICATION

(11) **EP 3 036 663 B1**
(45) Date of publication and mention of the grant of the patent: **04.10.2017**
(21) Application number: 14761745.0
(22) Date of filing: 20.08.2014
(51) Int. Cl.: G06F 17/30

(54) **THIN DATABASE INDEXING**
EFFIZIENTE DATENBANKINDIZIERUNG
INDEXAGE EFFICACE POUR BANQUES DE DONNÉES

(30) Priority: 20.08.2013 US 201313971735; 20.08.2013 US 201313971756
(43) Date of publication of application: 29.06.2016
(73) Proprietor: Pivotal Software Inc., Palo Alto, California 94304 (US)
(72) Inventor: BRAND, Michael, Victoria 3165 (AU)
(74) Representative: Conroy, John
(86) International application number: PCT/US2014/051901
(87) International publication number: WO 2015/026949

(56) References cited:
- US-A1- 2009 222 408

## Description

### BACKGROUND OF THE INVENTION

In Big Data applications, the data sets are so large and complex that traditional database management techniques become impractical. It would be desirable to develop database techniques for handling Big Data.

Published U.S. patent application No. 2009/222408 A1 discloses a method for storing a functional relationship between elements of a source set and elements of a query result set using an indexing structure comprising an indexing array, the method comprising choosing at least two hash functions that generate hash values corresponding to mapped positions in the indexing array, for respective elements of the source set, generating at least one equation representing a functional relationship with an element of the query result set, solving the equations for variables, respective variables for an element of the source set combining to represent an element of the query result set according to the functional relationship and storing the variables at the mapped positions in the indexing array

### SUMMARY

The present invention relates to a computer implemented method as set out in claim 1, a system as set out in claim 10 and a computer-readable medium as set out in claim 15. Other embodiments are described in the dependent claims

### BRIEF DESCRIPTION OF THE DRAWINGS

Various embodiments of the invention are disclosed in the following detailed description and the accompanying drawings.
Figure 1 illustrates an embodiment of a database table 100.
Figure 2 illustrates an embodiment of an index 200 for the column "Ann."
Figure 3 illustrates an embodiment of a database table 300 using thin database indexing techniques.
Figure 4A illustrates an embodiment of a shorter cycle 400 out of a permutation cyclic structure
Figure 4B illustrates an embodiment of a longer cycle 420 out of the permutation cyclic structure.
Figure 5 illustrates an embodiment of a cycle 500.
Figure 6A illustrates an embodiment of a process 600 for retrieving the address in which a particular column value resides using thin database indexing techniques.
Figure 6B is a flow chart of an example process for determining a row having a particular encoded column value.
Figure 7A illustrates an embodiment of a conversion table 700 for converting an original set of column data (e.g., temperature data) into a permutation, and vice versa.
Figure 7B illustrates an embodiment of a conversion table 710 embodying the same information as conversion table 700.
Figure 8 illustrates an embodiment of a flow chart 800 for a value query.
Figure 9 illustrates an embodiment of a process 900 for constructing a table of shortcuts, H.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Databases typically maintain data in tables. In this specification, a table refers to a data model that defines a structure between column data attributes and row data elements having particular values for each of the column data attributes. Data of table need not be stored in a tabular data structure. Rather, the data of the table can be stored in any appropriate data structure using conventional data storage techniques.

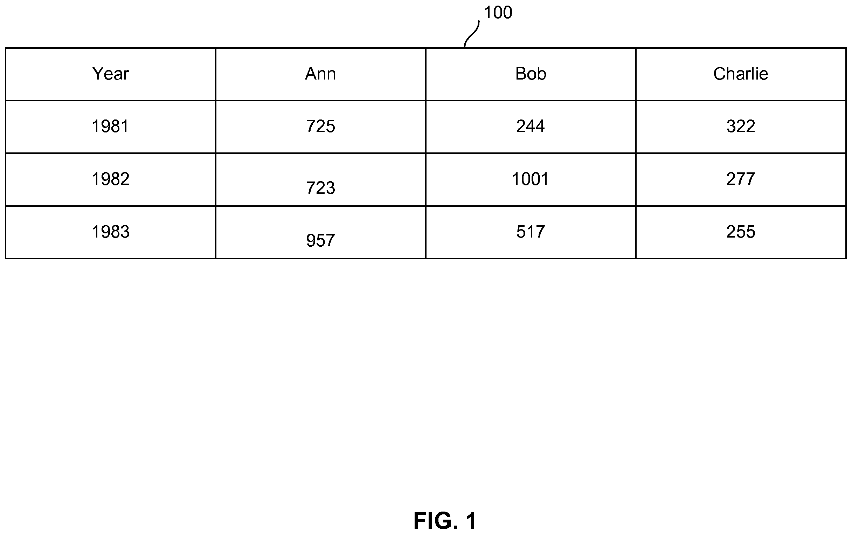

Figure 1 illustrates an embodiment of a database table 100. The data in database table 100 may represent any appropriate collection of data: sales figures, electricity usage, distance driven, and the like, and the data may be represented in the database in any chosen unit. Typically, each column represents data from a single type (e.g., 'Bob's sales figures') and each row represents data that are logically associated with a single entity (e.g. 'Information about a particular year'). For example, the '1001' datum in Figure 1 may reflect Bob's sales figures during 1982. Typically, database tables include a handful of columns, but the number of rows may be very large: in Big Data applications, tables may have 10¹² to 10¹⁵ rows.

Two common types of queries regarding table data are value queries and range queries. Examples of value queries are "print out the rows where the value of the 'year' column is 1982" and "print out the rows where the value of the 'Ann' column is 957;" examples of range queries are "print out the rows where the value of the 'year' column is between 1982 and 1992" and "print out the rows where the value of the 'Ann' column is between 800 and 1000." Both kinds of queries may return zero, one, or multiple rows.

One way to retrieve the answers to such queries is by sequentially scanning the entire set of data in the table. However, for a table with many rows, this way of retrieving the answers may be prohibitively slow. An alternate solution is to keep the data sorted. For example, the data in database table 100 is sorted by year, and hence a range query example "print out the rows where the value of the 'year' column is between 1982 and 1992" given above can be performed by quickly finding the first and the last relevant rows (e.g., by a binary-searching process). Once the first and the last relevant rows are found, the results of the query can be given by reading out all relevant rows within the range.

If the database has N rows and the query is to return n out of N rows, then a query of an unsorted table performs the task in a time proportional to N (denoted as Θ(N) time in the notation of computational complexity). In contrast, retrieval from a sorted table can be done far more efficiently, in only Θ(n + log N) time; the "log N" component is the time it takes to find the first and last relevant rows, and the "n" component is the time it takes to read out the data. Because the "n" component is inherent in returning a result, without loss of generality it can be ignored and the "log N" component is referred to as the overhead of the query. Therefore, querying an unsorted table incurs an Θ(N)-time overhead, whereas a sorted table has a substantially lower Θ(log N)-time overhead.

The sorting solution introduces its own problem: by sorting the data according to one column (the 'year' column of the previous example), the data becomes unsorted for all other columns. For example, the range query example "print out the rows where the value of the 'Ann' column is between 800 and 1000" given above cannot be solved in the same manner.

One solution to this problem is data replication. However, data replication can be prohibitively expensive when the databases store large quantities of data.

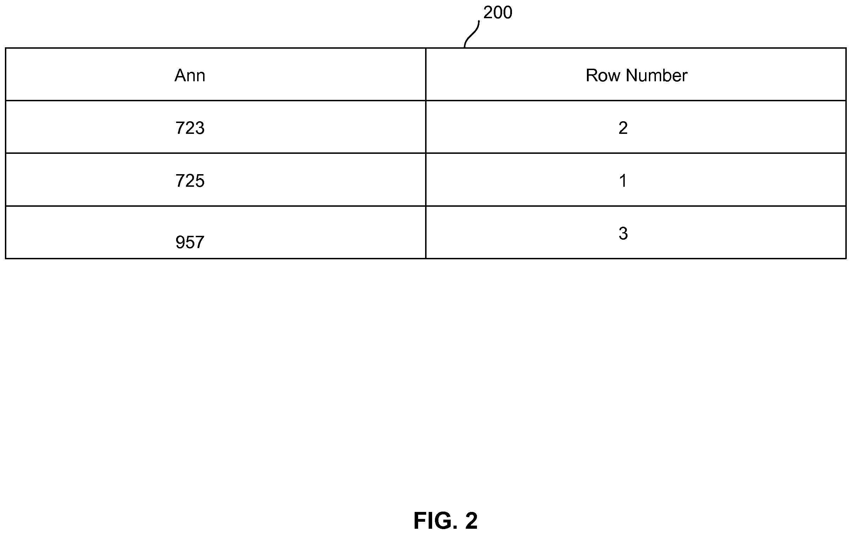

An alternate solution is indexing. An index is, conceptually, a table that includes two columns. One column replicates data from the original table, but the data is sorted. The other column stores pointers into the original table. Pointers are data elements that provide information regarding a particular data location (often referred to as an address). Addresses are numbers, but are often depicted in schematic drawings by arrows. When used to address rows in a table, addresses can be thought of as row numbers. Given a particular row number, retrieval of that row can be performed in a constant time independent of N. Pointers permit the logical replication of the entire table in the new format, while physically requiring much less space. Figure 2 illustrates an embodiment of an index 200 for the column "Ann."

Given index 200, the range query "print out the rows where the value of the 'Ann' column is between 800 and 1000" can be resolved in Θ(log N)-time overhead, by first performing the query on index 200, thus retrieving a list of pointers (row numbers), then using this list to retrieve the original table data from database table 100.

In real world applications, database tables may have many columns that are queried frequently. Therefore, multiple indexes need to be built for each table. As an example, suppose that a table with N≈10¹⁵ rows and c columns needs to be indexed for every column. Suppose further that each column datum is an integer that can be stored in 4 bytes. The amount of space required to keep all the table's information is 4*N*c bytes. Storing the indexes, however, requires substantially more space. A pointer capable of addressing a table of this size will have to be fractionally more than 6 bytes in size. In practical implementation terms, this means that it will be 8 bytes long. Thus, a single index row requires 12 bytes. The total space spent on indexes is therefore 12*N*c bytes, or 3 times more than the original table data, for a total of quadrupled disk-space requirement.

For conventional databases, this cost of extra space may be acceptable. However, in Big Data applications, the cost of indexes is not merely storage space cost: an even more substantial cost associated with indexes is the read/write time cost.

A database holding N≈10¹⁵ rows is generally split over many disks. Furthermore, cach index is necessarily split over many disks. This has two basic costs. Each disk can be either in an 'up' or a 'down' state, and the disk data can only be accessed when it is up. Spinning a disk up or down takes an amount of time more substantial than any of the other time-costs mentioned so far. Binary searching over the index data may require access to only Θ(log N) index rows, but it becomes a costly process if the rows are spread across many different disks, requiring Θ(log N) disks to be spun up and down for the index seeks.

Furthermore, after finding the relevant start and end of the relevant data on the index, this data contains pointers determining the address to the actual data to be retrieved. The data in the tables is unsorted. Typically, n may be small compared to N, such that each row is likely to be in a different disk. Hence, the process requires Θ(n) disk up-down actions.

In some other techniques, the index is split into several indexes: a primary index gives the identity of the disk on which the data is to be found, and secondary indexes exist in each disk, indexing only the data that resides in their local disk. In terms of disk up-down actions, this is still Θ(log N) for the search through the primary index, but the subsequent secondary index search is Θ(n).

This solution has several drawbacks: it requires a large number of disk up-down actions (totaling Θ(log N+n)) and a large amount of space to store the indexes. The need to store indexes in the same disk as the data exacerbates the disk space problem, by reducing the amount of data that can be stored on each disk and increasing the degree of data fragmentation.

In applications such as Big Data, N may be so large that both of the costs become too high for the solution to be practicable. One technique for reducing data fragmentation is to simply omit the secondary indexes. But in doing so, the seek time to find each data element increases significantly. For example, if a disk can store K data rows, then the cost increases from Θ(log K) disk searches per query and one more per element to be retrieved from the disk (in the case of indexed searches) to a full Θ(K)-time disk scan (in the case of no secondary indexes).

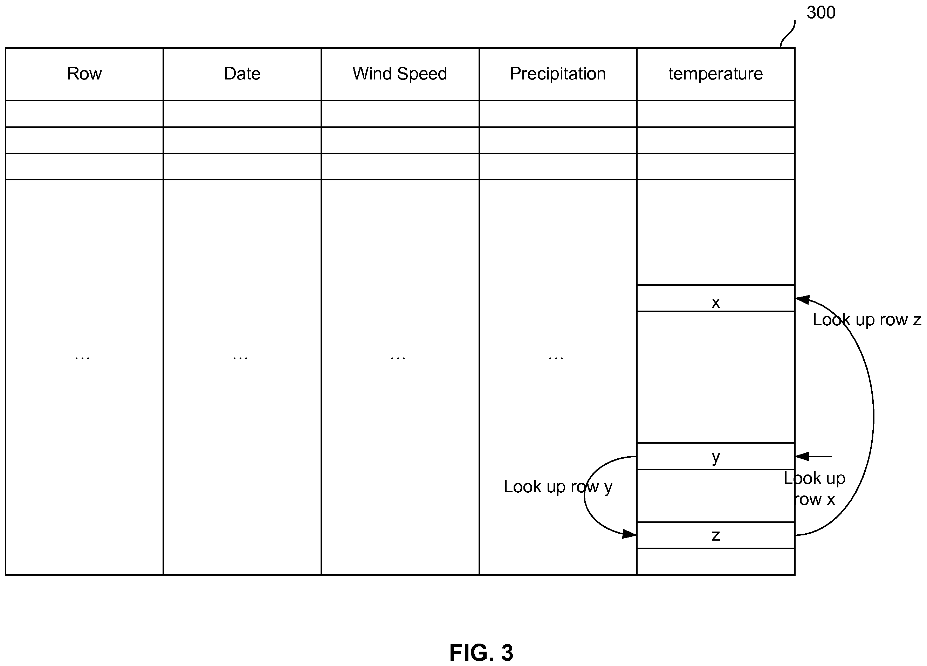

Figure 3 illustrates an embodiment of a database table 300 using thin database indexing techniques. The indexing techniques are thin in the sense that most of the storage area is used for table data, with minimal indexing overhead. Mathematically, if looking up a column value with a row number is represented by the function f( ), then the function of finding the row number corresponding to a column value is the function f⁻¹( ), the inverse of the function f( ). In a database query, a range of row values is indicated, and the inverse function f⁻¹( ) is used to retrieve the row numbers in which the range of row values can be found. It can be shown that a database query using thin database indexing requires only Θ(*n*) disks to be spun up and down.

In one example, database table 300 may be used to store the weather information of a city. As shown in Figure 3, database table 300 includes a number of columns of data, including columns for the date, wind speed, precipitation, and temperature of the city, and each column of data has a number of rows. For each column, the data is encoded as a cyclic structure such that the row number in which a particular encoded value is stored can be obtained by using the particular encoded value as an address to look up the stored encoded value at that address, then using the stored encoded value again as an address to look up the next stored encoded value, and repeating this look-up process until finally the particular encoded value is found in a particular row of database table 300. The particular row of database table 300 is then read out from database table 300 to retrieve the various columns of data in that row. More specifically, referring to Figure 3, suppose that a user wishes to retrieve the information in a row in which the encoded temperature is *x.* x is the target search value. x is used as an address (also referred to as a candidate row number) to look up the stored encoded value y in row x of the temperature column, and then y is used as an address to look up the stored encoded value z in row y, and then z is again used as an address to look up the stored encoded value in row z. Since the stored encoded temperature value in row z is equal to x, i.e., the encoded temperature value that the user is searching for, it is determined that z is the target row number and that row z is the row of information that should be retrieved from database table 300.

In some embodiments, functions may be used to convert row values to row number values. Similar to the example as shown in Figure 3, a function g may be used to convert x, the target search value, into a row number value to look up the stored encoded value in that row of the temperature column. A function f may be used to convert the stored encoded value in that row of the temperature column into a row number value to look up the next stored encoded value. The function f is an invertible function, i.e., for every row number value, b, there is exactly one row value, a, such that f(a) = b.

Data in each column of database table 300 can be encoded using different techniques such that the row number of a searched column value can be determined by walking through the database in a cyclic manner as described above. For example, the data in a column of database table 300 may be encoded as values in a permutation cycle: the encoded data in the column includes the numbers 1 through N, occurring in any order in the column, with each number appearing exactly once. As an illustrative example for describing the thin database indexing techniques, the data in each column of database table 300 is hereinafter assumed to be encoded as values of a permutation cycle. However, those skilled in the art should realize that the techniques disclosed in the present application are not only limited to this particular illustrative example.

Data in each column of database table 300 encoded as values of a permutation cycle enables a row number of a searched column value to be determined by walking through the database in a cyclic manner as described above, because a permutation function, P(x), has a cyclic structure. Beginning from an element x, and repeatedly calculating P(x), P(P(x)), P(P(P(x))), and so forth, will eventually return a result that is equal to x, completing a cycle.

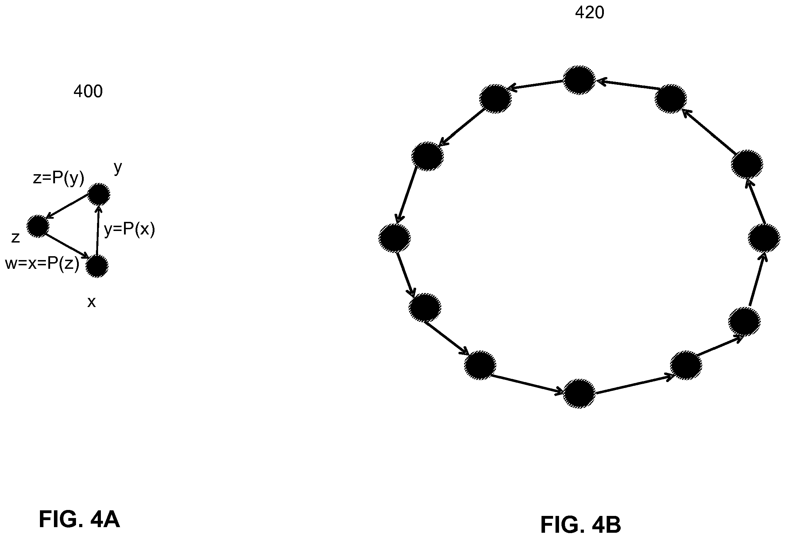

Figure 4A and Figure 4B illustrate an embodiment of a shorter cycle 400 out of a permutation cyclic structure and an embodiment of a longer cycle 420 out of the permutation cyclic structure, respectively. Cycle 400 is shorter, with 3 elements only. Cycle 420 is longer, with 12 elements. The elements arc depicted by the circles. The permutation function, i.e., f(x) = P(x), is represented by the solid arrows. An arrow from any element having a value of x leads to an element having a value of P(x). In terms of required storage space, no extraneous information is needed to be stored in order to calculate P(x). To calculate P(x), the column value that is stored in row x is looked up from the table. To calculate P(P(x)), the value that is stored in row = P(x) is looked up from the table. By repeating this process, i.e., P(x), P(P(x)), P(...P(P(P(x)))), the entire cycle of the permutation function can be traced. For example, in cycle 400 of length 3 depicted in Figure 4A, the entire cycle is traced by starting at an element x, and then calculating y = P(x), z = P(y), and w = P(z). Detecting that the entire cycle has been traced can be accomplished by checking whether w is equal to x. In the example of Figure 4A, w is equal to x; therefore, x = P(z), and z = P⁻¹(x). In other words, the value x is stored in row z, which was determined with just three look-ups. Unfortunately, if the permutation function P(x) is a random permutation, e.g., if the values are uniformly chosen from all possible permutation values, then most elements may belong to long cycles, such as cycle 420 or cycles with more elements than cycle 420. Long cycles require more look-ups into the column before the row number in which a column value is stored can be determined.

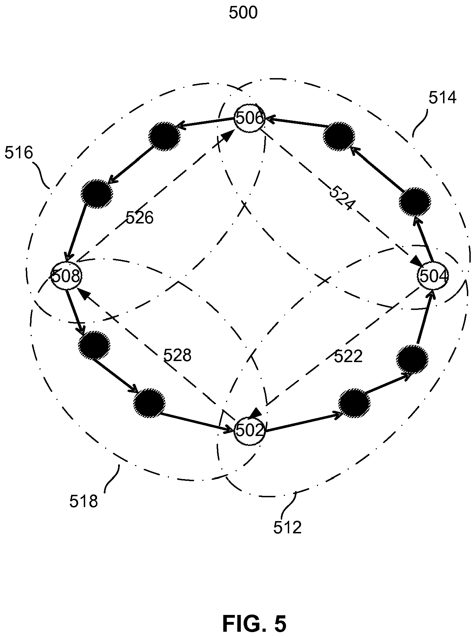

In some embodiments, the number of required look-ups can be reduced by splitting longer cycles into a plurality of shorter cycles. The cyclic structure of a random permutation function is known: on average, the proportion of cycles with potential cycle length k will be 1/k. Also, in each cycle of length k, an average of kL/N of the elements will have a value in the range 1≤x≤L, for arbitrary L, and these elements will be distributed uniformly among the elements of the cycle, for an average of N/L between any two consecutive ones. Considering the above, elements within the range 1 to L (hereinafter referred to as the special elements) should appear in random locations within the permutation cycles. For example, if cycle 500 is a cycle of a random permutation function, then the special elements (502, 504, 506, and 508) are distributed randomly within the cycle, as indicated by the hollow circles in Figure 5. Cycle 500 can be split into a plurality of sub-cycles -- sub-cycles 512, 514, 516, and 518 of length 4 eachby including for each special element a pointer to the preceding special element. A pointer from each indexed element to its predecessor special element is referred to as a shortcut. In Figure 5, the shortcuts are indicated as dashed arrows. The inverse of the permutation function (f⁻¹( ) = P⁻¹( )) can be computed by following the original cycle, but following the shortcuts whenever they are available. For example, special element 504 is indexed by adding a shortcut 522 from special element 504 to the preceding special element 502. For elements belonging to sub-cycle 512, the inverse of the permutation function is obtained by following the original cycle 500, but following shortcut 522 from special element 504 to special element 502, through a total of four pointers only. As shown above, thin database indexing requires storage for a small number (L) of values. In addition, these values are relatively small in size, being only in the range 1≤x≤L and not in the full range 1≤x≤N, thus requiring fewer bits to store the information

In some embodiments, additional shortcuts are included for further shortening of the cycle lengths. As described above, the L indexed special elements are randomly distributed in a cycle. Therefore, statistically, some of the indexed special elements may potentially be spaced much further apart from their corresponding predecessor special elements than the average. In these cases, the sub-cycle length is longer, thus requiring the traversal of more elements/pointers before the value being searched corresponding to the inverse of the permutation function is found. Thus, elements with shortcuts are added in any stretch longer than S that does not include any special elements, referred to as exception elements. In some embodiments, the extra shortcuts associated with the exception elements are stored in a separate table (referred to as an exceptions table), holding the information of both the original element number and the address to which its shortcut leads. In some embodiments, the table is sorted by the element number for easy retrieval.

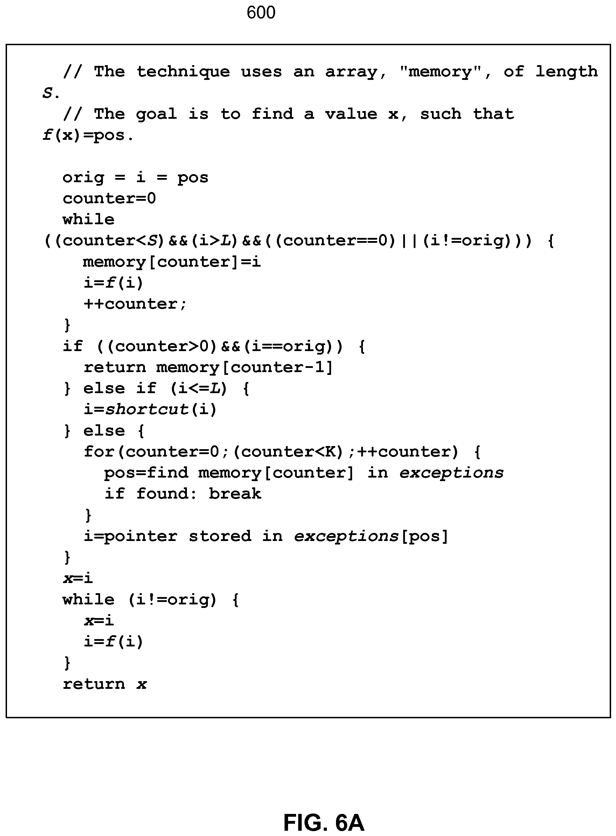

Figure 6A illustrates an embodiment of a process 600 for retrieving the address in which a particular column value resides using thin database indexing techniques. Process 600 has two characteristics:
1) Any element that is in the range 1≤x≤L has a shortcut.
2) There is a shortcut (for a special element or an exception element) spaced at most every S elements apart.

In the worst-case scenario, each element is retrieved by going through a cycle of length S and performing for each element in the cycle a lookup into the exceptions table. However, the exceptions table is relatively small and can easily fit within a single disk. The heavy part of the computation is S * n row reads, each of which may reside in a different disk, for a total of S * n disk up-down operations. Thus, for a reasonably-sized S, the number of disk up-down operations is far lower than other techniques, where the number of such operations may be related to N.

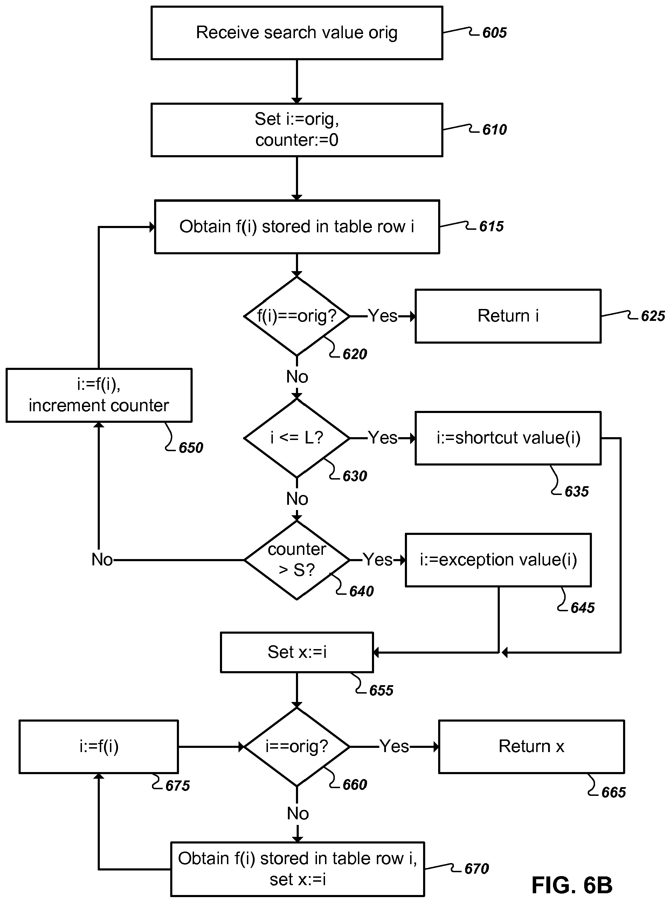

Figure 6B is a flow chart of an example process for determining a row having a particular encoded column value. In general, the system follows a permutation cycle by iteratively looking up subsequent rows according to encoded column values stored in each row. The process can be implemented by one or more computer programs installed on one or more computers. The process will be described as being performed by an appropriately programmed system of one or more computers.

The system receives a search value "orig" (605). In general, the value orig, is an encoded column value to which an original column value specified in a query is mapped in a mapping between original column values and encoded column values.

The system sets a variable i to orig and a counter to zero (610). The variable i represents a value on the permutation cycle. The system can update i by following the permutation cycle in order to iteratively consider subsequent rows of the table.

The system obtains f(i) stored in the table at row i (615). The value of f(i) is the next value on the permutation cycle for the permutation function f(i). Rather than actually computing the next value for the permutation function f(i), the system need only read the encoded column value stored in the table at row i.

The system determines whether f(i) is equal to orig (620). If so, the system returns i as the identifier of the row that satisfies the query (branch to 625).

If not, the system determines whether i < L (branch to 630). If i < L, then i has an associated shortcut in a shortcuts table. Thus, the system sets i equal to the shortcut value of i defined in the shortcuts table (branch to 635). After taking the shortcut, the system can proceed to iterate along the permutation cycle (branch to 655), described in more detail below.

If i was not less than L, the system determines whether the counter > S (branch to 640). S represents a chosen value for a maximum number of elements in a cycle without a shortcut. If the counter is greater than S, a particular encoded column value in the cycle necessarily has an associated shortcut in an exceptions table. The system thus sets i equal to the exception value of i defined in the exceptions table (branch to 645). The system can then proceed to iterate along the permutation cycle (branch to 655).

If the counter was not greater than S, the system updates i to be f(i) and increments the counter (branch to 650), and then obtains f(i) stored in the table at the row corresponding to the updated value of i (615).

If the system took a shortcut (at 635) or an exception (at 645), the system can then proceed to iterate along the permutation cycle to find a row having an encoded column value equal to orig.

The system first sets a variable x to i (655) in order to store a previous value of i.

The system then determines whether i is equal to orig (660). If so, the system returns x as the identifier of the row that satisfies the query (branch to 665).

If not, the system obtains the next f(i) stored in the table at row i and updates x to have the previous value of i (branch to 670). The system then updates i to be the value obtained for f(i) (675) and again determines if the updated value of i is equal to orig (660). In this way, the system can chain through the encoded column values in the table to identify subsequent rows until a row having an encoded column value matching orig is reached.

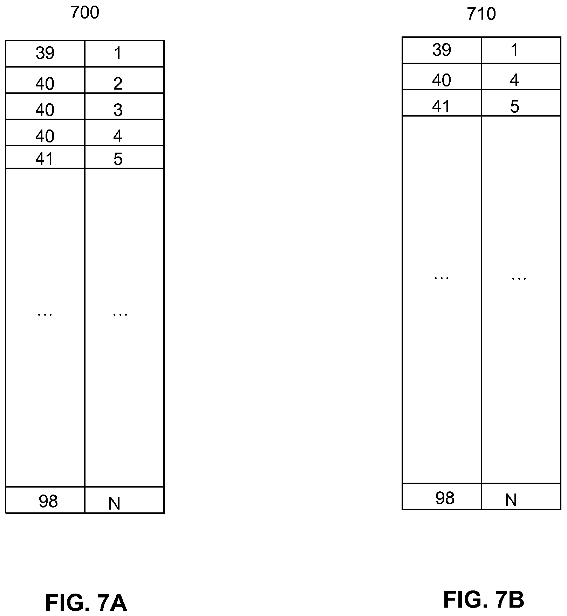

Referring back to Figure 3, each of the columns of database table 300 is encoded as a permutation cycle: the encoded data in the column includes the numbers 1 through N, which can occur in any order, with each number appearing exactly once. Figure 7A illustrates an embodiment of a conversion table 700 for converting an original set of column data (e.g., temperature data) into values of a permutation cycle, and vice versa. Conversion table 700 includes two columns. The left column stores the original column values sorted from the lowest value to the highest value. The right column stores the encoded column values, with 1 corresponding to the lowest original column value and N corresponding to the highest original column value. For example, as shown in Figure 7A, 39 degrees Fahrenheit is the lowest temperature of the original column values, and its encoded column value is 1. The second lowest temperature of the original column values, 40 degrees Fahrenheit, has an encoded column value of 2. Because there are multiple original column values of 40 degrees Fahrenheit, these entries have encoded column values of 2, 3, and 4. The highest temperature, 98 degrees Fahrenheit, has an encoded column value of N.

Conversion table 700 has columns that are sorted. In some embodiments, conversion table 700 can be compressed. Figure 7B illustrates a conversion table 710 that is a compressed version of the conversion table 700. Conversion table 710 includes two columns. The left column stores the original column values that sorted from the lowest value to the highest value. The right column stores a running count of the number of original column values that are less than or equal to each original column value. For example, as shown in Figure 7B, as 39 degrees Fahrenheit is the lowest temperature and has only one occurrence, the running count in the right column is 1. The second lowest temperature, 40 degrees Fahrenheit, has 3 occurrences, and thus the running count in the right column is 4. If the original data is 32 bits long, for example, then a table of size 2³² entries may be used to keep a count of the number of data entries with values less than or equal to the current entry. This conversion table requires approximately 32 Gigabytes to store, considerably less than the memory required to store the original column of length N=10¹² to 10¹⁵ for Big data applications. Furthermore, this table can be made even smaller by utilizing compression techniques such as delta encoding. The resultant storage requirement of the conversion table is negligible compared to the total table data. Traditional indexing techniques require storing a pointer in addition to the data element. In comparison, the thin database indexing techniques require storage size that is only slightly more than the maximum between the size of the pointer and the size of the data to be stored.

In another embodiment, a conversion table that stores the number of occurrences for each and every data value can be used. For example, if the original data is 32 bits long, then a table of size 2³² entries may be used to keep a count of the number of data entries with values equal to the current entry. A person of ordinary skill in the art will recognize that many other ways of implementing the conversion tables are possible.

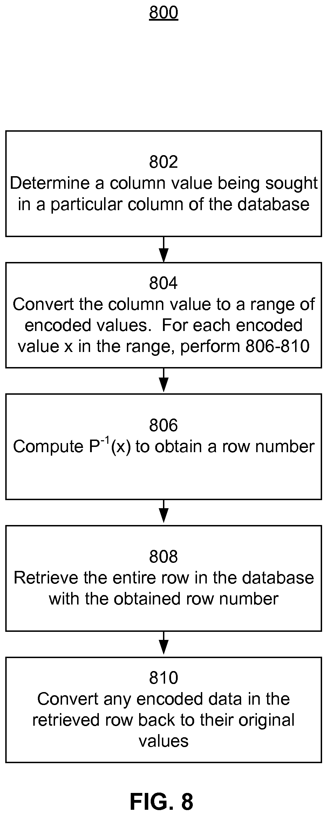

Figure 8 illustrates an embodiment of a flow chart 800 for a value query. For example, a value query may be "print out the rows where the value of the 'temperature' column is 40 degrees Fahrenheit." At 802, the original column value being sought in a particular column of the table is determined. For the example value query given above, the column value being sought is 40 degrees Fahrenheit. At 804, the original column value is converted to its encoded column value. Continuing with the example above and using the conversion table 700 in Figure 7A, the encoded column value x can be 2, 3, or 4. In the scenario wherein the original column value has multiple occurrences such that more than one encoded column value is possible, then the subsequent steps 806, 808 and 810 are iterated for each of the possible encoded column values. In the foregoing example, steps 806, 808 and 810 are repeated for encoded column values of x = 2, 3 and 4. At 806, P⁻¹(x) is computed to obtain the row number in which the encoded column value resides. The value x is used as an address to look up the stored encoded temperature value y in row x of the encoded temperature column, and then y is used as an address to look up the stored encoded temperature value z in row y, and so on until the encoded value x is found. The row number in which the encoded value x is found is the row of information to be retrieved. At 808, the entire row of information is retrieved from database table 300 using the obtained row number. At 810, any data in the retrieved row which have been encoded are converted back to their original values using their corresponding conversion tables. This conversion need only be performed on data columns that have been thin-indexed (and are therefore stored as values of a permutation cycle). If the data column which is the subject of the query (temperature in the foregoing example) is the only data column that has been thin-indexed in the table, then the conversion can be performed by simply reading the stored value of the query.

A range query may be generally described as "find all rows where the values of the search column lie between the column values t_1 and t_n." A range query can be derived from a value query by generalizing "column value" in 802 and 804 to a "range of column values". Specifically, a range query can be implemented by looking up the conversion table corresponding to the search column to find x_1 and x_n, the first encoded value corresponding to column value t_1 and the last encoded value corresponding to column value t_n, respectively. The conversion table is sorted, and hence the encoded values starting from x_1 and ending at x_n form the range of encoded values that fall within the range query. The range query can then be implemented by performing steps 806, 808 and 810 for each encoded value within the range.

In some embodiments, the encoded column values encoded as values of a permutation cycle may be generated by a random permutation function. In order to ensure that performance is unaffected by the characteristics of the table data, the permutation values can be decoupled from the original data. To do this, instead of working with the original permutation function, f, a new permutation function is defined, g(x)=f(h(x)), where h(x) is a permutation value chosen randomly. For example, h(x) can be a hash function that returns a value between 1 and *N.* For example, by choosing a random value r and defining h(x) as (x+r) modulo *N* ensures that for any specific x, g(x) is random and uniformly chosen. Other randomization schemes are possible. The new permutation function, g(x), has the necessary randomness properties regardless of f. Thus, when a value, y, is found such that g(y)=x, this means that f(h(y))=x, so h(y) is the solution to the problem of finding f⁻¹(x).

The special elements, exception elements, and the shortcuts associated with these elements may be identified and created using different techniques. In one embodiment, an entire permutation cycle is traversed to determine the special elements and exception elements, and then their corresponding shortcuts are created. Building the index can be performed by following the cycles. A single pass over the data suffices. However, the pass is not a sequential pass, and thus it includes N random reads, with N disk spin-ups. Instead of following an entire cycle, the cycle may be broken down into fragments f², f⁴, f⁸, and so forth. This can be done in a few (sequential) passes over the data, which can be fully parallelized (e.g., in map-reduce type algorithms).

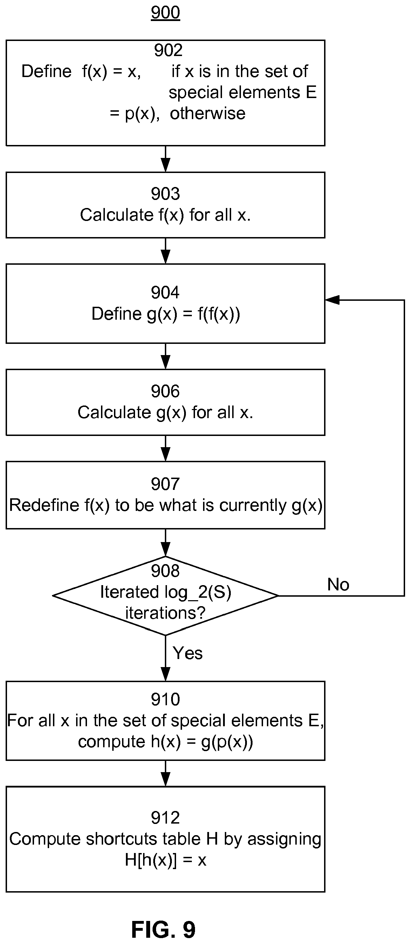

Figure 9 illustrates an embodiment of a process 900 for constructing a table of shortcuts, H. At 902, function f(x) is defined to be equal to x, if x belongs to E, the set of special elements; otherwise f(x) is defined to be p(x), where p is the permutation function. At 903, function f(x) is computed for all values of x. At 904, function g(x) is defined to be f(f(x)). At 906, g(x) is computed for all values of x. At 907, f(x) is redefined to be what is currently g(x). 904 through 907 are then iterated for log₂(S) iterations. At 910, h(x) is computed to be equal to g(p(x)) for all x in the set of special elements E. At 912, the shortcuts table H is filled by assigning H(h(x)) = x. Process 900 is more efficient than traversing an entire permutation cycle. For example, steps 903, 906, 908, and 910 may be fully parallelized. These steps can thus take advantage of massively multi-parallel architectures. Distributed file systems (e.g., Hadoop MapReduce) and in-database techniques may be used.

In some embodiments, each disk's contents are indexed separately. When retrieving, the first step is to use the conversion table in order to translate the query into a range of permutation values. After this first step, the number of results that will be returned from each disk is known. If all conversion tables are placed on a single disk (or a few disks), then the disks can be scanned quickly, without introducing extraneous disk spin-ups. At the end of this scan, the identities of which disks contain relevant elements are known, and only those disks need to be loaded. The use of the indexing method described still calls for random accesses, but these random accesses are within a single disk. In some embodiments, this process can be parallelized.

Although the foregoing embodiments have been described in some detail for purposes of clarity of understanding, the invention is not limited to the details provided. There arc many alternative ways of implementing the invention. The disclosed embodiments arc illustrative and not restrictive.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory program carrier for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them. The computer storage medium is not, however, a propagated signal.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Computers suitable for the execution of a computer program include, by way of example, can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) monitor, an LCD (liquid crystal display) monitor, or an OLED display, for displaying information to the user, as well as input devices for providing input to the computer, e.g., a keyboard, a mouse, or a presence sensitive display or other surface. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending resources to and receiving resources from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous.

## Claims

1. A computer-implemented method comprising:
receiving (605) a database query requesting one or more rows of a database table (100; 200; 300) having *N* rows, each row having an encoded column value, wherein the encoded column values are between 1 and *N* inclusive, wherein each distinct encoded column value occurs in the column exactly once, wherein each encoded column value represents a corresponding original column value, and wherein the query specifies a first original column value;
mapping (610) the first original column value to a first row number identifying a first row;
chaining (615 - 675) through the encoded column values in the table (100; 200; 300) from the first row to identify subsequent rows until a row having an encoded column value matching the first row number is reached; and
identifying (620; 660) the row as a first row satisfying the query,
wherein the encoded column values define a permutation cycle (500) through row numbers of the table (100; 200; 300), and wherein chaining through the encoded column values in the table (100; 200; 300) from the first row follows the permutation cycle,
**characterized in that** the method further comprises:
determining that a particular encoded column value is associated with an additional cycle (512; 514; 516; 518) within the permutation cycle (500), wherein chaining through the encoded column values in the table (100; 200; 300) from the first row comprises following the additional cycle (512; 514; 516; 518) within the permutation cycle (500), and wherein the row having an encoded column value matching the first row number is on the additional cycle (512; 514; 516; 518).

2. The method of claim 1, wherein mapping the first original column value to the first row number comprises obtaining, from a conversion table that maps original column values to row numbers, the first row number to which the first original column value specified by the query is mapped.

3. The method of claim 1, further comprising:
mapping the first original column value to a second row number identifying a second row;
chaining through the encoded column values in the table (100; 200; 300) from the second row to identify subsequent rows until a row having an encoded column value matching the second row number is reached; and
identifying the row as a second row satisfying the query.

4. The method of claim 1, wherein chaining through the encoded column values in the table (100; 200; 300) from the first row comprises:
obtaining a first encoded column value for the column from the first row;
determining that the first encoded column value for the column does not match the first row number; and
obtaining a second encoded column value for the column from a second row having a row number that matches the first encoded column value.

5. The method of claim 1, wherein the encoded column value in each row corresponds to a row number of another row of the table (100; 200; 300).

6. The method of claim 1, wherein the permutation cycle (500) has no more than L additional cycles (512; 514; 516; 518) within the permutation cycle (500), wherein L is a predetermined constant.

7. The method of claim 6, wherein one or more additional cycles (512; 514; 516; 518) are defined by a shortcut table, wherein the shortcut table stores a mapping between a first encoded column value in the permutation cycle (500) and a second, nonadjacent column value in the permutation cycle (500).

8. The method of claim 1, wherein the encoded column values in the table (100; 200; 300) from the first row have an associated additional cycle defined within the permutation cycle in each sequence of encoded column values of length no more than S, wherein S is a predetermined constant.

9. The method of claim 8, wherein one or more additional cycles (512; 514; 516; 518) are defined by an exceptions table, wherein the exceptions table stores a mapping between a first encoded column value in the permutation cycle (500) and a second, nonadjacent column value in the permutation cycle (500).

10. A system comprising:
one or more computers and one or more storage devices storing instructions that are operable, when executed by the one or more computers, to cause the one or more computers to perform operations comprising:
receiving (605) a database query requesting one or more rows of a database table (100; 200; 300) having *N* rows, each row having an encoded column value, wherein the encoded column values are between 1 and *N* inclusive, wherein each distinct encoded column value occurs in the column exactly once, wherein each encoded column value represents a corresponding original column value, and wherein the query specifies a first original column value;
mapping (610) the first original column value to a first row number identifying a first row;
chaining (615 - 675) through the encoded column values in the table(100; 200; 300) from the first row to identify subsequent rows until a row having an encoded column value matching the first row number is reached; and
identifying (620; 660) the row as a first row satisfying the query,
wherein the encoded column values define a permutation cycle (500) through row numbers of the table (100; 200; 300), and wherein chaining through the encoded column values in the table (100; 200; 300) from the first row follows the permutation cycle (500),
**characterized in that** the operations further comprise:
determining that a particular encoded column value is associated with an additional cycle (512; 514; 516; 518) within the permutation cycle (500), wherein chaining through the encoded column values in the table from the first row comprises following the additional cycle (512; 514; 516; 518) within the permutation cycle (500), and wherein the row having an encoded column value matching the first row number is on the additional cycle (512; 514; 516; 518).

11. The system of claim 10, wherein the permutation cycle (500) has no more than L additional cycles (512; 514; 516; 518) within the permutation cycle (500), wherein L is a predetermined constant.

12. The system of claim 11, wherein one or more additional cycles (512; 514; 516; 518) are defined by a shortcut table, wherein the shortcut table stores a mapping between a first encoded column value in the permutation cycle (500) and a second, nonadjacent column value in the permutation cycle (500).

13. The system of claim 10, wherein the encoded column values in the table (100; 200; 300) from the first row have an associated additional cycle (512; 514; 516; 518) defined within the permutation cycle (500) in each sequence of encoded column values of length no more than S, wherein S is a predetermined constant.

14. The system of claim 13, wherein one or more additional cycles (512; 514; 516; 518) are defined by an exceptions table, wherein the exceptions table stores a mapping between a first encoded column value in the permutation cycle (500) and a second, nonadjacent column value in the permutation cycle (500).

15. A computer readable medium storing instructions that are operable, when executed by the one or more computers, to cause the one or more computers to perform operations according to any one of claims 1 to 9.

## Patentansprüche

1. Computerimplementiertes Verfahren, umfassend:
Empfangen (605) einer Datenbankabfrage, die eine oder mehrere Zeilen einer Datenbanktabelle (100; 200; 300) mit N Zeilen anfordert, wobei jede Zeile einen codierten Spaltenwert aufweist, wobei die codierten Spaltenwerte zwischen 1 und einschließlich N liegen, wobei jeder distinkte codierte Spaltenwert in der Spalte genau einmal vorkommt, wobei jeder codierte Spaltenwert einen entsprechenden ursprünglichen Spaltenwert repräsentiert und wobei die Abfrage einen ersten ursprünglichen Spaltenwert spezifiziert;
Abbilden (610) des ersten ursprünglichen Spaltenwerts zu einer ersten Zeilennummer, die eine erste Zeile identifiziert;
Verketten (615 - 675) durch die codierten Spaltenwerte in der Tabelle (100; 200; 300) von der ersten Zeile, um nachfolgende Zeilen zu identifizieren, bis eine Zeile erreicht wird, die einen codierten Spaltenwert aufweist, der mit der ersten Zeilennummer übereinstimmt; und
Identifizieren (620; 660) der Zeile als eine erste Zeile, die die Abfrage erfüllt,
wobei die codierten Spaltenwerte einen Permutationszyklus (500) durch Zeilennummern der Tabelle (100; 200; 300) definieren und wobei das Verketten durch die codierten Spaltenwerte in der Tabelle (100; 200; 300) von der ersten Zeile dem Permutationszyklus folgt,
**dadurch gekennzeichnet, dass** das Verfahren ferner Folgendes umfasst:
Bestimmen, dass ein bestimmter codierter Spaltenwert mit einem zusätzlichen Zyklus (512; 514; 516; 518) im Permutationszyklus (500) assoziiert ist, wobei das Verketten durch die codierten Spaltenwerte in der Tabelle (100; 200; 300) von der ersten Zeile Folgen des zusätzlichen Zyklus (512; 514; 516; 518) im Permutationszyklus (500) umfasst und wobei sich die Zeile, die einen codierten Spaltenwert aufweist, der mit der ersten Zeilennummer übereinstimmt, auf dem zusätzlichen Zyklus (512; 514; 516; 518) befindet.

2. Verfahren nach Anspruch 1, wobei das Abbilden des ersten ursprünglichen Spaltenwerts zur ersten Zeilennummer Erhalten der ersten Zeilennummer, zu der der durch die Abfrage spezifizierte erste ursprüngliche Spaltenwert abgebildet wird, aus einer Umwandlungstabelle, die ursprüngliche Spaltenwerte zu Zeilennummern abbildet, umfasst.

3. Verfahren nach Anspruch 1, ferner umfassend:
Abbilden des ersten ursprünglichen Spaltenwerts zu einer zweiten Zeilennummer, die eine zweite Zeile identifiziert;
Verketten durch die codierten Spaltenwerte in der Tabelle (100; 200; 300) von der zweiten Zeile, um nachfolgende Zeilen zu identifizieren, bis eine Zeile erreicht wird, die einen codierten Spaltenwert aufweist, der mit der zweiten Zeilennummer übereinstimmt; und
Identifizieren der Zeile als eine zweite Zeile, die die Abfrage erfüllt.

4. Verfahren nach Anspruch 1, wobei das Verketten durch die codierten Spaltenwerte in der Tabelle (100; 200; 300) von der ersten Zeile Folgendes umfasst:
Erhalten eines ersten codierten Spaltenwerts für die Spalte von der ersten Zeile;
Bestimmen, dass der erste codierte Spaltenwert für die Spalte nicht mit der ersten Zeilennummer übereinstimmt; und
Erhalten eines zweiten codierten Spaltenwerts für die Spalte von einer zweiten Zeile, die eine Zeilennummer aufweist, die mit dem ersten codierten Spaltenwert übereinstimmt.

5. Verfahren nach Anspruch 1, wobei der codierte Spaltenwert in jeder Zeile einer Zeilennummer einer anderen Zeile der Tabelle (100; 200; 300) entspricht.

6. Verfahren nach Anspruch 1, wobei der Permutationszyklus (500) nicht mehr als *L* zusätzliche Zyklen (512; 514; 516; 518) im Permutationszyklus (500) aufweist, wobei L eine vorbestimmte Konstante ist.

7. Verfahren nach Anspruch 6, wobei ein oder mehrere zusätzliche Zyklen (512; 514; 516; 518) durch eine Abkürzungstabelle definiert ist bzw. sind, wobei die Abkürzungstabelle eine Abbildung zwischen einem ersten codierten Spaltenwert im Permutationszyklus (500) und einem zweiten, nicht benachbarten Spaltenwert im Permutationszyklus (500) speichert.

8. Verfahren nach Anspruch 1, wobei die codierten Spaltenwerte in der Tabelle (100; 200; 300) von der ersten Zeile einen assoziierten zusätzlichen Zyklus aufweisen, der im Permutationszyklus in jeder Sequenz von codierten Spaltenwerten mit einer Länge von nicht mehr als S definiert ist, wobei S eine vorbestimmte Konstante ist.

9. Verfahren nach Anspruch 8, wobei ein oder mehrere zusätzliche Zyklen (512; 514; 516; 518) durch eine Ausnahmentabelle definiert ist bzw. sind, wobei die Ausnahmentabelle eine Abbildung zwischen einem ersten codierten Spaltenwert im Permutationszyklus (500) und einem zweiten, nicht benachbarten Spaltenwert im Permutationszyklus (500) speichert.

10. System, umfassend:
einen oder mehrere Computer und eine oder mehrere Speichereinrichtungen, die Anweisungen speichert bzw. speichern, die funktionsfähig sind, wenn sie durch den einen oder die mehreren Computer ausgeführt werden, zu bewirken, dass der eine oder
die mehreren Computer Arbeitsabläufe durchführt bzw. durchführen, die Folgendes umfassen:
Empfangen (605) einer Datenbankabfrage, die eine oder mehrere Zeilen einer Datenbanktabelle (100; 200; 300) mit *N* Zeilen anfordert, wobei jede Zeile einen codierten Spaltenwert aufweist, wobei die codierten Spaltenwerte zwischen 1 und einschließlich *N* liegen, wobei jeder distinkte codierte Spaltenwert in der Spalte genau einmal vorkommt, wobei jeder codierte Spaltenwert einen entsprechenden ursprünglichen Spaltenwert repräsentiert und wobei die Abfrage einen ersten ursprünglichen Spaltenwert spezifiziert;
Abbilden (610) des ersten ursprünglichen Spaltenwerts zu einer ersten Zeilennummer, die eine erste Zeile identifiziert;
Verketten (615 - 675) durch die codierten Spaltenwerte in der Tabelle (100; 200; 300) von der ersten Zeile, um nachfolgende Zeilen zu identifizieren, bis eine Zeile erreicht wird, die einen codierten Spaltenwert aufweist, der mit der ersten Zeilennummer übereinstimmt; und
Identifizieren (620; 660) der Zeile als eine erste Zeile, die die Abfrage erfüllt,
wobei die codierten Spaltenwerte einen Permutationszyklus (500) durch Zeilennummern der Tabelle (100; 200; 300) definieren und wobei das Verketten durch die codierten Spaltenwerte in der Tabelle (100; 200; 300) von der ersten Zeile dem Permutationszyklus (500) folgt,
**dadurch gekennzeichnet, dass** die Arbeitsabläufe ferner Folgendes umfassen:
Bestimmen, dass ein bestimmter codierter Spaltenwert mit einem zusätzlichen Zyklus (512; 514; 516; 518) im Permutationszyklus (500) assoziiert ist, wobei das Verketten durch die codierten Spaltenwerte in der Tabelle von der ersten Zeile Folgen des zusätzlichen Zyklus (512; 514; 516; 518) im Permutationszyklus (500) umfasst und wobei sich die Zeile, die einen codierten Spaltenwert aufweist, der mit der ersten Zeilennummer übereinstimmt, auf dem zusätzlichen Zyklus (512; 514; 516; 518) befindet.

11. System nach Anspruch 10, wobei der Permutationszyklus (500) nicht mehr als *L* zusätzliche Zyklen (512; 514; 516; 518) im Permutationszyklus (500) aufweist, wobei *L* eine vorbestimmte Konstante ist.

12. System nach Anspruch 11, wobei ein oder mehrere zusätzliche Zyklen (512; 514; 516; 518) durch eine Abkürzungstabelle definiert ist bzw. sind, wobei die Abkürzungstabelle eine Abbildung zwischen einem ersten codierten Spaltenwert im Permutationszyklus (500) und einem zweiten, nicht benachbarten Spaltenwert im Permutationszyklus (500) speichert.

13. System nach Anspruch 10, wobei die codierten Spaltenwerte in der Tabelle (100; 200; 300) von der ersten Zeile einen assoziierten zusätzlichen Zyklus (512; 514; 516; 518) aufweisen, der im Permutationszyklus (500) in jeder Sequenz von codierten Spaltenwerten mit einer Länge von nicht mehr als *S* definiert ist, wobei *S* eine vorbestimmte Konstante ist.

14. System nach Anspruch 13, wobei ein oder mehrere zusätzliche Zyklen (512; 514; 516; 518) durch eine Ausnahmentabelle definiert ist bzw. sind, wobei die Ausnahmentabelle eine Abbildung zwischen einem ersten codierten Spaltenwert im Permutationszyklus (500) und einem zweiten, nicht benachbarten Spaltenwert im Permutationszyklus (500) speichert.

15. Computerlesbares Medium, das Anweisungen speichert, die funktionsfähig sind, wenn sie durch den einen oder die mehreren Computer ausgeführt werden, zu bewirken, dass der eine oder die mehreren Computer Arbeitsabläufe gemäß einem der Ansprüche 1 bis 9 durchführt bzw. durchführen.

## Revendications

1. Procédé mis en oeuvre par ordinateur consistant à :
recevoir (605) une interrogation de base de données demandant une ou plusieurs rangées d'une table de base de données (100 ; 200 ; 300) ayant *N* rangées, chaque rangée comprenant une valeur de colonne codée , les valeurs de colonnes codées se situant entre 1 et *N* compris, chaque valeur de colonne codée distincte apparaissant dans la colonne exactement une fois, chaque valeur de colonne codée représente une valeur de colonne originale correspondante, et l'interrogation spécifiant une première valeur de colonne originale ;
mapper (610) la première valeur de colonne originale à un premier numéro de rangée identifiant une première rangée ;
effectuer un enchaînement (615-675) via les valeurs de colonnes codées dans la table (100 ; 200 ; 300) depuis la première rangée afin d'identifier des rangées suivantes jusqu'à ce qu'une rangée ayant une valeur de colonne codée correspondant au premier numéro de rangée soit atteinte; et
identifier (620 ; 660) la rangée comme étant une première rangée satisfaisant à l'interrogation ;
dans lequel les valeurs de colonnes codées définissent un cycle de permutation (500) sur les numéros de rangée de la table (100 ; 200 ; 300) et dans lequel l'enchaînement via les valeurs de colonnes codées dans la table (100 ; 200 ; 300) depuis la première rangée suivent le cycle de permutation ;
**caractérisé en ce que** le procédé consiste en outre à :
déterminer qu'une valeur de colonne codée particulière est associée à un cycle additionnel (512 ; 514 ; 516 ; 518) dans le cycle de permutation (500), dans lequel l'enchaînement via les valeurs de colonnes codées dans la table (100 ; 200 ; 300) depuis la première rangée consiste à suivre le cycle additionnel (512 ; 514 ; 516 ; 518) dans le cycle de permutation (500), et dans lequel la rangée ayant une valeur de colonne codée correspondant au premier numéro de rangée est sur le cycle additionnel (512 ; 514 ; 516 ; 518).

2. Procédé selon la revendication 1, dans lequel le mappage de la première valeur de colonne originale au premier numéro de rangée consiste à obtenir, à partir d'une table de conversion qui mappe les valeurs de colonnes originales aux numéros de rangée, le premier numéro de colonne auquel la première valeur de colonne originale spécifiée par l'interrogation est mappée.

3. Procédé selon la revendication 1, consistant en outre à :
mapper la première valeur de colonne originale à un second numéro de rangée identifiant une seconde rangée ;
effectuer un enchaînement via les valeurs de colonnes codées dans la table (100 ; 200 ; 300) depuis la seconde rangée pour identifier des rangées suivantes jusqu'à ce qu'une rangée ayant une valeur de colonne codée correspondant au second numéro de rangée soit identifiée ; et
identifier la rangée comme étant la seconde rangée satisfaisant à l'interrogation.

4. Procédé selon la revendication 1, dans lequel l'enchaînement via les valeurs de colonnes codées dans la table (100 ; 200 ; 300) depuis la première rangée consiste à :
obtenir une première valeur de colonne codée pour la colonne depuis la première rangée ;
déterminer que la première valeur de colonne codée pour la colonne ne correspond pas au premier numéro de rangée; et
obtenir une seconde valeur de colonne codée pour la colonne depuis une seconde rangée ayant un numéro de rangée qui correspond à la première valeur de colonne codée.

5. Procédé selon la revendication 1, dans lequel la valeur de colonne codée dans chaque rangée correspond à un numéro de rangée d'une autre rangée de la table (100 ; 200 ; 300).

6. Procédé selon la revendication 1, dans lequel le cycle de permutation (500) ne comprend pas plus de L cycles additionnels (512 ; 514 ; 516 ; 518) dans le cycle de permutation (500), *L* étant une constante prédéterminée.

7. Procédé selon la revendication 6, dans lequel un ou plusieurs cycles additionnels (512 ; 514 ; 516 ; 518) sont définis par une table de raccourcis, la table de raccourcis comprenant un mappage entre une première valeur de colonne codée dans le cycle de permutation (500) et une seconde valeur de colonne non adjacente dans le cycle de permutation (500).

8. Procédé selon la revendication 1, dans lequel les valeurs de colonnes codées dans la table (100 ; 200 ; 300) depuis la première rangée ont un cycle additionnel associé défini dans le cycle de permutation dans chaque séquence de valeurs de colonnes codées d'une longueur ne dépassant pas *S,* dans lequel *S* est une constante prédéterminée.

9. Procédé selon la revendication 8, dans lequel un ou plusieurs cycles additionnels (512 ; 514 ; 516 ; 518) sont définis par une table d'exceptions, la table d'exceptions comprenant un mappage entre une première valeur de colonne codée dans le cycle de permutation (500) et une seconde valeur de colonne non adjacente dans le cycle de permutation (500).

10. Système comprenant :
un ou plusieurs ordinateurs et un ou plusieurs dispositifs de stockage stockant des instructions qui, lorsqu'elles sont exécutées par le ou les ordinateurs, peuvent contraindre le ou les ordinateurs à effectuer des opérations consistant à :
recevoir (605) une interrogation de base de données demandant une ou plusieurs rangées d'une table de base de données (100 ; 200 ; 300) ayant *N* rangées, chaque rangée comprenant une valeur de colonne codée , les valeurs de colonnes codées se situant entre 1 et *N* compris, chaque valeur de colonne codée distincte apparaissant dans la colonne exactement une fois, chaque valeur de colonne codée représente une valeur de colonne originale correspondante, et l'interrogation spécifiant une première valeur de colonne originale ;
mapper (610) la première valeur de colonne originale à un premier numéro de rangée identifiant une première rangée ;
effectuer un enchaînement (615-675) via les valeurs de colonnes codées dans la table (100 ; 200 ; 300) depuis la première rangée afin d'identifier des rangées suivantes jusqu'à ce qu'une rangée ayant une valeur de colonne codée correspondant au premier numéro de rangée soit atteinte; et
identifier (620 ; 660) la rangée comme étant une première rangée satisfaisant à l'interrogation ;
dans lequel les valeurs de colonnes codées définissent un cycle de permutation (500) sur les numéros de rangée de la table (100 ; 200 ; 300) et dans lequel l'enchaînement via les valeurs de colonnes codées dans la table (100 ; 200 ; 300) depuis la première rangée suivent le cycle de permutation (500) ;
**caractérisé en ce que** les opérations consistent en outre à :
déterminer qu'une valeur de colonne codée particulière est associée à un cycle additionnel (512 ; 514 ; 516 ; 518) dans le cycle de permutation (500), dans lequel l'enchaînement via les valeurs de colonnes codées dans la table depuis la première rangée consiste à suivre le cycle additionnel (512 ; 514 ; 516 ; 518) dans le cycle de permutation (500), et dans lequel la rangée ayant une valeur de colonne codée correspondant au premier numéro de rangée est sur le cycle additionnel (512 ; 514 ; 516 ; 518).

11. Système selon la revendication 10, dans lequel le cycle de permutation (500) ne comprend pas plus de L cycles additionnels (512 ; 514 ; 516 ; 518) dans le cycle de permutation (500), *L* étant une constante prédéterminée.

12. Système selon la revendication 11, dans lequel un ou plusieurs cycles additionnels (512 ; 514 ; 516 ; 518) sont définis par une table de raccourcis, la table de raccourcis comprenant un mappage entre une première valeur de colonne codée dans le cycle de permutation (500) et une seconde valeur de colonne non adjacente dans le cycle de permutation (500).

13. Système selon la revendication 10, dans lequel les valeurs de colonnes codées dans la table (100 ; 200 ; 300) depuis la première rangée ont un cycle additionnel associé (512 ; 514 ; 516 ; 518) défini dans le cycle de permutation (500) dans chaque séquence de valeurs de colonnes codées d'une longueur ne dépassant pas *S,* dans lequel *S* est une constante prédéterminée.

14. Système selon la revendication 13, dans lequel un ou plusieurs cycles additionnels (512 ; 514 ; 516 ; 518) sont définis par une table d'exceptions, la table d'exceptions comprenant un mappage entre une première valeur de colonne codée dans le cycle de permutation (500) et une seconde valeur de colonne non adjacente dans le cycle de permutation (500).

15. Support lisible par ordinateur stockant des instructions qui, lorsqu'elles sont exécutées par le ou les ordinateurs, peuvent contraindre le ou les ordinateurs à effectuer des opérations selon l'une quelconque des revendications 1 à 9.
